# EUROPÄISCHE PATENTSCHRIFT

(11) **EP 1 556 450 B1**
(45) Veröffentlichungstag und Bekanntmachung des Hinweises auf die Patenterteilung: **18.09.2013**
(21) Anmeldenummer: 03809292.0
(22) Anmeldetag: 17.10.2003
(51) Int. Cl.: C09D 163/10, C09D 175/14, C08G 59/14

(54) **WÄSSRIGE NICHTIONISCH STABILISIERTE EPOXIDHARZE**
AQUEOUS NON-IONICALLY STABILISED EPOXY RESINS
RESINES EPOXY AQUEUSES STABILISEES DE FACON NON IONIQUE

(30) Priorität: 21.10.2002 AT 15982002
(43) Veröffentlichungstag der Anmeldung: 27.07.2005
(73) Patentinhaber: ALLNEX AUSTRIA GmbH, 8402 Werndorf (AT)
(72) Erfinder: AWAD, Rami-Raimund, A-8042 Graz (AT); LUNZER, Florian, A-8010 Graz (AT); GERLITZ, Martin, A-8041 Graz (AT)
(74) Vertreter: Destryker, Elise Martine
(86) Internationale Anmeldenummer: PCT/EP2003/011561
(87) Internationale Veröffentlichungsnummer: WO 2004/037935

(56) Entgegenhaltungen:
- EP-A- 0 997 486
- WO-A-02/48226
- US-A- 4 151 219
- US-A- 4 351 922
- US-A- 4 452 929

## Beschreibung

Die Erfindung betrifft wäßrige nichtionisch stabilisierte Epoxidharze. Des weiteren betrifft sie Verfahren zu deren Herstellung und deren Verwendung als strahlenhärtbare Bindemittel insbesondere für coil-coating-Lacke.

Wäßrige strahlenhärtbare Bindemittel sind beispielsweise aus der EP-B 0 694 531 bekannt. Die damit hergestellten Lackfilme sind zwar elastisch, ergeben jedoch nur ungenügenden Korrosionsschutz.

Strahlenhärtbare Bindemittel, die ohne Lösungsmittel (in Substanz) oder gelöst in einem organischen Lösungsmittel vorliegen, haben bei (für die angestrebten physikalischen Eigenschaften) ausreichendem Polymerisationsgrad eine deutlich höhere Viskosität in der Applikationsform als wäßrige Systeme. Ein Absenken der Viskosität ist nur durch den Zusatz von Reaktivverdünnern möglich. Die Viskosität wäßriger Dispersionen ist dagegen nicht vom Polymerisationsgrad der dispersen Phase, sondern im wesentlichen nur von ihrem Volumenanteil in der Dispersion abhängig.

Aus der Patentanmeldung JP 10 - 36762 A ist eine wäßrige Epoxidharz-Zusammensetzung bekannt, die eine Emulsion eines Epoxidharzes (I) und eine Emulsion eines Epoxid-Ester-Harzes (II) mit einer Carboxylgruppe enthält. Bevorzugt enthält die Emulsion (II) ein Harz, das durch Pfropfpolymerisation eines Carboxylgruppen enthaltenden Acrylharzes auf das Umsetzung-produkt eines Epoxidharzes mit einer ungesättigten Fettsäure erzeugt wird.

Wäßrige Lacke zur Anwendung bei dem sogenannten "coil coating"-Verfahren sind beispielsweise bekannt aus der US-A 5,763,507. Diese Lacke basieren auf Bindemitteln abgeleitet von mit (Meth)Acrylaten modifizierten wasserverdünnbaren Epoxidharzen und ergeben befriedigenden Korrosionsschutz; sie werden mit Methylolgruppen-haltigen Harzen, insbesondere Resolen, gehärtet. Die Härtungstemperatur im Durchlaufofen beträgt 240 °C.

Gegenüber diesem Stand der Technik besteht die Aufgabe der vorliegenden Erfindung, solche Bindemittel auf Basis von wasserverdünnbaren Epoxidharzen bereitzustellen, die bei niedriger Temperatur gehärtet werden können, insbesondere durch die Einwirkung von energiereicher Strahlung. Dabei soll der bei der Beschichtung gebildete Film schnell auf dem Substrat auftrocknen, zu elastischen Filmen härtbar sein und das Substrat wirkungsvoll vor Korrosion schützen.

Diese Aufgabe wird gelöst durch die Bereitstellung von wäßrigen Bindemitteln, die wäßrige nichtionisch stabilisierte Epoxidharze mit radikalisch polymerisierbaren Gruppen enthalten.

Gegenstand der vorliegenden Erfindung sind daher Bindemittel enthaltend wäßrige nichtionisch stabilisierte Epoxidharze ABC mit olefinisch ungesättigten Gruppen, die Bausteine enthalten abgeleitet von mit Polyäthylenglykol modifizierten Epoxidharzen A, von Polyoxyäthylengruppen freien Epoxidharzen B und von olefinisch ungesättigten Säuren C, wobei mindestens 50 % aller von den Epoxidharzen A und B abgeleiteten Reaktionsprodukte mindestens eine Estergruppe enthalten, die durch Reaktion einer endständigen Epoxidgruppe mit einer olefinisch ungesättigten Säure C mit einer Carboxylgruppe gebildet ist, wobei das nichtionisch stabilisierte Epoxidharz ABC herstellbar ist durch Umsetzung einer Mischung des Epoxidharzes A und des Epoxidharzes B mit der Säure C, und wobei die Säure C ausgewählt ist aus Acrylsäure, Methacrylsäure, Crotonsäure, Isocrotonsäure, sowie den Halbestern der zweibasigen Säuren Maleinsäure, Fumarsäure, Citraconsäure und Mesaconsäure.

Ein weiterer Gegenstand der Erfindung sind Mischungen der wäßrigen nichtionisch stabilisierten Epoxidharze ABC mit ungesättigten Urethanen DEF abgeleitet von mehrfunktionellen Isocyanaten D, von mehrfunktionellen aliphatischen Alkoholen E und von Hydroxylgruppen-haltigen olefinisch ungesättigten Verbindungen F.

Die Erfindung betrifft weiter ein Verfahren zur Herstellung der wäßrigen nichtionisch stabilisierten Epoxidharze ABC, sowie ein Verfahren zur Herstellung von Mischungen aus den Epoxidharzen ABC und den ungesättigten Urethanen DEF.

Des weiteren betrifft die Erfindung eine bevorzugte Ausführungsform, in der das nichtionisch stabilisierte Epoxidharz ABC, gegebenenfalls in Mischung mit den ungesättigten Urethanen DEF, gemischt wird mit Umsetzungsprodukten G'GHI aus Epoxidharzen G' mit mindestens zwei Epoxidgruppen pro Molekül und Reaktionsprodukten GHI von Epoxidharzen G, Fettsäuren H und Aminen I, die beschrieben sind in der europäischen Patentanmeldung EP-A 1 233 034.

Dabei enthalten mindestens 50 % aller von den Epoxidharzen A und B abgeleiteten Reaktionsprodukte mindestens eine Estergruppe, die durch Reaktion einer endständigen Epoxidgruppe mit einer olefinisch ungesättigten Säure C gebildet ist.

Die Epoxidharze A enthalten Bausteine von mehrfunktionellen Epoxidharzen wie unter B beschrieben mit mindestens 2 Epoxidgruppen je Molekül und von Polyäthylenglykolen mit zwei Hydroxylgruppen je Molekül. Derartige modifizierte Epoxidharze sind beispielsweise aus der DE-A 36 43 751 bekannt, deren dies betreffende Offenbarung durch die Bezugnahme hier inkludiert wird. Anstelle des Polyäthylenglykols können auch Copolyätherpolyole mit Äthylenoxy- und Propylenoxy-Bausteinen eingesetzt werden, wobei diese blockartig oder statistisch verteilt sein können. Dabei Äthylenoxy-Gruppen enthalten. Es ist auch möglich, ein hydrophiles Epoxidharz durch Reaktion eines Polyepoxids mit einem primären oder sekundären Polyäthylen-(propylen)-glykolmonoätheramin (Handelsbezeichnung ®Jeffamine) oder durch Umsetzung eines OH-Gruppen-haltigen Polyepoxides mit einem Diisocyanat und einem Polyäthylen-(propylen)-glykolmonoäther herzustellen, wie in der EP-A 0 661 314 beschrieben. Bevorzugt sind solche Epoxidharze A, die abgeleitet sind von Polyäthylenglykolen mit gewichtsmittlerer molarer Masse M_{w} von 200 bis 20000, bevorzugt von 300 bis 10000 g/mol. Weiter sind solche Epoxidharze A bevorzugt, bei deren Herstellung ein Verhältnis der Anzahl der Hydroxylgruppen in dem Polyäthylenglykol zur Anzahl der Epoxidgruppen im Epoxidharz von ca. 1:0,8 bis ca. 1:4, bevorzugt 1:1 bis 1:3,5 eingehalten wird, und weiter solche Epoxidharze A, deren spezifischer Gehalt an Epoxidgruppen zwischen 2,5 und 200 mmol/kg ("Epoxidäquivalentgewicht von 5 bis 400 kg/mol) liegt.

Die Epoxidharze **B,** die frei von Polyoxyäthylengruppen sind, sind ausgewählt aus Verbindungen, die im Mittel mehr als eine Epoxidgruppe, vorzugsweise zwei Epoxidgruppen, pro Molekül enthalten. Diese Epoxidverbindungen (Epoxidharze) können dabei sowohl gesättigt als auch ungesättigt, sowie aliphatisch, cycloaliphatisch, aromatisch oder hetero-cyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidyläther mehrwertiger Phenole oder mehrwertiger Alkohole, deren spezifischer Gehalt an Epoxidgruppen zwischen 1,1 und 6,7 mol/kg liegt ("Epoxidäquivalentgewicht" oder "EV-Wert" zwischen 150 und 900 g/mol), insbesondere jedoch zwischen 1,5 und 6,7 mol/kg (zwischen 150 und 650 g/mol) liegt und die Hydroxylzahlen von 0 bis 200 mg/g, vorzugsweise 5 bis 100 mg/g aufweisen.

Die Hydroxylzahl ist gemäß DIN EN ISO 4629 (DIN 53 240) definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Als mehrwertige Phenole sind beispielsweise zu nennen: Resorcin, Hydrochinon, 2,2-Bis-(4'-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4'-hydroxyphenyl)-1,1 -äthan, Bis-(4'-hydroxyphenyl)-1,1-isobutan, Bis-(4'-hydroxy-tert.-butylphenyl)-2,2-propan, Bis-(2-hydroxy-naphthyl)-methan, 1,5-Dihydroxynaphthalin, Tris-(4-hydroxyphenyl)-methan, Bis-(4-hydroxy-phenyl)-äther, Bis-(4-hydroxyphenyl)-sulfon sowie die Chlorierungs- und Bromierungsprodukte der vorstehend genannten Verbindungen.

Es können auch Polyglycidyläther von Polyalkoholen verwendet werden, wie z.B. Äthandiol-1,2-diglycidyläther, Propandiol-1,2-diglycidyläther, Propandiol-1,3-diglycidyläther, Butandioldiglycidyläther, Pentandioldiglycidyläther, Neopentylglykoldiglycidyläther, Hexandioldiglycidyl-äther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, Trimethylolpropans, Trimethyloläthans, Pentaerythrits, Sorbits, Polyglycidyläther von oxalkylierten Polyolen wie z. B. des Glycerins, Trimethylolpropans, Pentaerythrits, Diglycidyläther des Cyclohexandimethanols, Bis-(4-hydroxycyclohexyl)methans und 2,2-Bis-(4'-hydroxycyclohexyl)propans, Polyglycidyläther des Rizinusöls oder des Tris-(2-hydroxy-äthyl)-isocyanurats. Vorzugsweise werden Polyglycidyläther mit einem spezifischen Gehalt an Epoxidgruppen von 1,25 bis 6,7 mol/kg ("Epoxidäquivalentgewicht" von 150 bis 800 g/mol), insbesondere von 2,5 bis 3,4 mol/kg (300 bis 400 g/mol) eingesetzt. Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester. Dabei werden dieselben Bereiche der spezifischen Epoxidgruppen-Gehalte bevorzugt.

Die olefinisch ungesättigten Säuren C haben mindestens eine Säuregruppe, bevorzugt eine Carboxylgruppe, und mindestens eine olefinische Doppelbindung. Bevorzugt sind Säuren mit einer Doppelbindung in α-Stellung zur Säuregruppe, und besonders bevorzugt sind solche Verbindungen, die ein Wasserstoffatom oder eine Methylgruppe am α-Kohlenstoffatom tragen. Geeignete Säuren C sind insbesondere Acrylsäure, Methacrylsäure, Crotonsäure, Isocrotonsäure, Maleinsäure, Fumarsäure, Citraconsäure und Mesaconsäure sowie die Halbester der genannten zweibasigen Carbonsäuren.

Die mehrfunktionellen Isocyanate **D** sind mindestens difunktionell und können ausgewählt werden aus aromatischen und aliphatischen linearen, cyclischen oder verzweigten Isocyanaten, insbesondere Diisocyanaten. Bevorzugt werden Diisocyanate, wobei bis zu 5 % von deren Masse durch trifünktionelle oder höherfunktionelle Isocyanate ersetzt werden kann.

Die Diisocyanate besitzen vorzugsweise die Formel Q(NCO)₂, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet Beispiele derartiger bevorzugt einzusetzender Düsocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethyl-cyclohexylisocyanat (Isophorondiisocyanat, IPDI), 4,4'-Diisocyanatodicyclohexylmethan, 4,4'-Düsocyanatodicyclohexylpropan-(2,2),1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanato-diphenylpropan-(2,2), p-Xylylendiisocyanat und α, α, α',α'-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Hamstoffgruppen oder Biuretgruppen aufweisen. Bezüglich weiterer geeigneter Polyisocyanate sei beispielsweise auf die DE-A 29 28 552 verwiesen.

Die mehrfunktionellen aliphatische Alkohole E haben mindestens zwei Hydroxylgruppen pro Molekül und 2 bis 150 Kohlenstoffatome, bevorzugt 3 bis 40, und insbesondere 4 bis 20 Kohlenstoffatome. Sie können linear, verzweigt oder cyclisch sein, und können auch Fremdatome, wie Ätherbindungen, Esterbindungen oder sekundäre oder tertiäre Aminbindungen im Molekül enthalten. Derartige Verbindungen sind Ätheralkohole oder Polyätheralkohole wie Polyäthylenglykol, Polypropylenglykol, deren Mischungen und Copolymere und Polyoxybutylendiol ("Poly-THF"), sowie Polyesteralkohole und Aminoalkohole. Bevorzugt werden Glykol, 1,2- und 1,3-Propandiol, 1,2- und 1,4-Butandiol, Neopentylglykol, 1,6-Hexandiol, Trimethyloläthan, Glycerin, Trimethylolpropan, Erythrit, Pentaerythrit, Sorbit, Mannit, Ditrimethyloläthan, Diglycerin, Ditrimethylolpropan, Diäthylenglykol, Triäthylenglykol, Di- und Tri-Propylenglykol, Diäthanolamin, N-Methyl-diäthanolamin, Triäthanolamin, äthoxyliertes Trimethylolpropan und äthoxyliertes Glycerin.

Besonders bevorzugt sind 1,4-Butandiol und 1,6-Hexandiol.

Die Hydroxylgruppen-haltigen olefinisch ungesättigten Verbindungen F sind aliphatische ein-oder mehrfach ungesättigte Verbindungen mit 3 bis 20 Kohlenstoffatomen und mindestens einer Hydroxylgruppe. Besonders bevorzugt sind Allylakohol, Hydroxyäthylacrylat, Hydroxyäthylmethacrylat, 2- und 3-Hydroxypropyl-(meth)-acrylat, 1-Hydroxy-2-propyl-(meth)-acrylat, 4-Hydroxybutyl-(meth)-acrylat und 6-Hydroxyhexyl-(meth)-acrylat sowie die Acrylate und Methacrylate, die durch Umsetzung von (Meth)Acrylsäure mit 1,2-Epoxverbindungen entstehen, insbesondere mit Estern oder Äthern des Glycidylalkohols mit einwertigem aliphatischen Alkoholen oder Säuren, die in bevorzugter Weise tertiäre oder quaternäre Kohlenstoffatome enthalten. Solche Verbindungen sind beispielsweise die Ester von Glycidylalkohol mit den als ®Versatic-Säuren bezeichneten in α - Stellung verzweigten aliphatischen Monocarbonsäuren mit 5 bis 12 Kohlenstoffatomen.

Die Erfindung betrifft weiter ein Verfahren zur Herstellung der Mischungen aus den wäßrigen nichtionisch stabilisierten Epoxidharzen **ABC,** bei dem zunächst aus einem mit Polyäthylenglykol modifizierten Epoxidharz **A** durch Umsetzung mit der dem Epoxidharz zugrundeliegenden Hydroxyverbindung und dem dem Epoxidharz zugrundeliegenden Diepoxid, wie bevorzugt mit Bisphenol A und dem Diglycidyläther des Bisphenols A im Sinne einer Advancement-Reaktion ein kettenverlängertes Harz hergestellt wird, dies mit einem nicht mit Polyoxyäthylengruppen modifizierten Epoxidharz **B** vermischt und im zweiten Schritt gemeinsam mit der olefinisch ungesättigten Säure **C** umgesetzt wird. Dabei bildet sich unter Ringöffnung der Epoxidringe eine Adduktmischung **ABC,** wobei die Moleküle eine Halbester- und eine Hydroxylgruppe aufweisen, die bevorzugt sekundär ist. In einer separaten Reaktion (Schritt 3) wird ein Urethanacrylat **DEF** hergestellt aus einem mehrfunktionellen Isocyanat **D,** gegebenenfalls einer gesättigten mehrfunktionellen aliphatischen Hydroxyverbindung **E** und einer olefinisch ungesättigten aliphatischen Verbindung **F** mit einer Hydroxylgruppe und mindestens einer olefinischen Doppelbindung. Anschließend wird die Adduktmischung **ABC** mit den ungesättigten Urethanen **DEF** im vierten Schritt gemischt zu den erfindungsgemäßen Mischungen.

Dabei beträgt das Verhältnis der Masse der Epoxidharze **ABC** zur Masse der Urethane **DEF** (wobei jedesmal die Massen der Festharze, also ohne Anteil von Dispergiermittel oder Lösungsmittel betrachtet werden) 90 bis 30 zu 10 bis 70, bevorzugt 80 bis 35 zu 20 bis 65, und insbesondere 60 bis 40 zu 40 bis 60.

Dabei wird bevorzugt so vorgegangen, daß zunächst aus einem Epoxidharz mit im Mittel ca. 2 Epoxidgruppen pro Molekül und einem Polyäthylenglykol unter Ringöffnung der Epoxidgruppen ein in Wasser dispergierbares Epoxidharz hergestellt wird, das anschließend durch Umsetzung mit einem der in der Beschreibung der Komponente **B** genannten mehrwertigen Phenole und einem der in der Beschreibung der Komponente **B** genannten Glycidyläther oder -ester in einer Advancement-Reaktion das hydrophile Epoxidharz **A** bis zu dem bevorzugten Epoxidgruppengehalt von ca. 1,2 bis ca. 1,5 mol/kg ("EV-Wert" von ca. 670 bis ca. 830 g/mol) aufgebaut wird. Dabei wird das Dispergiermittel Wasser aus dem Umsetzungsprodukt des Epoxidharzes mit dem Polyäthylenglykol vor der Katalysatorzugabe durch Destillation unter vermindertem Druck entfernt. Anschließend wird das Epoxidharz **B** zugemischt und zu dieser Mischung die Säure C gegeben. Die Addition der Säure C an die Epoxidharzmischung erfolgt bei Temperaturen von bevorzugt 90 bis 130 °C während ca. 6 bis 10 Stunden, wobei die Säurezahl des Gemischs auf einen Wert von weniger als 10 mg/g absinkt.

Die Säurezahl ist gemäß DIN EN ISO 3682 (DIN 53 402) definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Das ungesättigte Urethan-Acrylat wird bevorzugt so hergestellt, indem die Hydroxylgruppen-haltige ungesättigte Verbindung F, gegebenenfalls gemischt mit dem mehrfunktionellen aliphatischen Alkohol **E,** und bevorzugt mit einem die Urethanbildung beschleunigenden Katalysator vorgelegt wird, die Vorlage auf 60 bis 90 °C aufgeheizt wird und das Isocyanat **D** so zudosiert wird, daß die Temperatur im genannten Bereich bleibt. Nach Erreichen eines Isocyanatgehalts von weniger als 1 cg/g, bevorzugt weniger als 0,1 cg/g (Massenanteil von weniger als 1 %, bevorzugt weniger als 0,1 %) wird die Reaktionsmasse abgekühlt und das erhaltene Urethan **DEF** mit der Epoxidkomponente **ABC** vermischt.

Es ist auch möglich, der Mischung von **ABC** und **DEF** eine weitere Menge des Addukts von Epoxidharz und Polyäthylenglykol gemäß der Komponente A zuzusetzen, um die Dispergierbarkeit des Gemischs zu verbessern. Diese Menge kann bevorzugt 2 bis 10 %, insbesondere 4 bis 8 % der Summe der Massen von **ABC** und **DEF** betragen. Dies Verhältnis bezieht sich jeweils auf die Massen der Festkörper.

Die Erfindung betrifft weiter eine bevorzugte Ausführungsform, in der das nichtionisch stabilisierte Epoxidharz **ABC** oder dessen Mischung mit dem ungesättigten Acrylat **DEF** gemischt wird mit Umsetzungsprodukten **G'GHI** aus Epoxidharzen **G'** mit mindestens zwei Epoxidgruppen pro Molekül und Reaktionsprodukten **GHI** von Epoxidharzen **G,** Fettsäuren **H** und Aminen **I,** die beschrieben sind in der europäischen Patentanmeldung EP-A 1 233 034. Durch die Bezugnahme wird die Beschreibung dieser Umsetzungsprodukte und das zu ihnen führende Herstellverfahren in die Offenbarung dieser Anmeldung mit aufgenommen. Es hat sich bei den Untersuchungen, die zu dieser Erfindung geführt haben, gezeigt, daß das bereits hervorragende Korrosionsschutzverhalten von Beschichtungen, die mit dem erfindungsgemäßen fremdemulgierten Epoxidharz formuliert sind, durch diese Zumischung nochmals verbessern läßt.

Dabei beträgt das Verhältnis der Masse des Epoxidharzes **ABC** oder der Summe der Massen des Epoxidharzes **ABC** und des Urethans **DEF** zur Masse des Umsetzungsprodukts **G'GHI** 90 bis 30 zu 10 bis 70, bevorzugt 80 bis 40 zu 20 bis 60, und besonders bevorzugt 70 bis 45 zu 30 bis 55.

Die Epoxidharze **G** und **G'** entsprechen ansonsten der Beschreibung für die Komponente **B,** ihr spezifischer Epoxidgruppengehalt beträgt unabhängig voneinander jeweils bevorzugt 0,4 bis 7 mol/kg, insbesondere 0,6 bis 6 mol/kg. In einer bevorzugten Ausführungsform werden für **G** und **G'** jeweils Diepoxidverbindungen eingesetzt, wobei die spezifischen Epoxidgruppengehalte bei **G** 0,5 bis 4 mol/kg, und bei **G'** 2 bis 5,9 mol/kg betragen.

Besonders bevorzugt werden für **G** und **G'** jeweils Epoxidhatze auf Basis von Bisphenol A und Bisphenol F sowie deren Mischungen.

Die Fettsäuren **H** weisen mindestens eine olefinische Doppelbindung auf, und haben 6 bis 30, bevorzugt 8 bis 26, und insbesondere 16 bis 22 Kohlenstoffatome. Bevorzugt sind Palmoleinsäure, Ölsäure und Erucasäure; Linolsäure, Linolensäure und Elaostearinsäure, Arachidonsäure und Clupanodonsäure sowie die aus den natürlich vorkommenden Ölen als Gemische erhältlichen Fettsäuren wie Leinölfettsäure, Sojaölfettsäure, Conjuvandol-Fettsäure, Tallölfettsäure, Baumwollsaatölfettsäure, Rapsölfettsäure, Fischölfettsäure und die aus dehydratisierten Ricinusöl gewonnenen Fettsäuregemische.

Die Amine **I** sind bevorzugt aliphatische, lineare, cyclische oder verzweigte Amine, die mindestens eine primäre oder sekundäre Aminogruppe enthalten. Sie weisen bevorzugt 2 bis 12 Kohlenstoffatome auf und können auch tertiäre Aminogruppen und/oder Hydroxylgruppen als funktionelle Gruppen enthalten. Besonders geeignet sind primäre Monoamine mit 6 bis 12 Kohlenstoffatomen wie Hexylamin, Cyclohexylamin, 2-Äthylhexylamin und Stearylamin, primäre Diamine wie Äthylendiamin, 1,4-Diaminobutan und 1,6-Diaminohexan, primär-tertiäre Diamine wie Dimethylaminopropylamin, Diäthylaminopropylamin, diprimär-sekundäre Amine wie Diäthylentriamin, 1,9-Diamino-5-azanonan, 1,13-Diamino-7-azatridecan, Triäthylentetramin und Tetraäthylenpentamin sowie die als ®Polymin im Handel erhältlichen Gemische oligomerer Diaminopolyäthylenimine, ferner sekundäre Amine und Diamine wie Piperidin, Piperazin, Di-n-butylamin, Morpholin, und hydroxyfunktionelle Amine wie Äthanolamin, Diäthanolamin und Diisopropanolamin. Es können auch Gemische der genannten Amine eingesetzt werden.

Die Produkte **GHI** lassen sich durch sequentielle Reaktion herstellen, wobei zunächst die Epoxidverbindungen **G** mit den Aminen **I** zu einem Produkt **GI** umgesetzt werden und diese Addukte im zweiten Schritt mit den Fettsäuren **H** zu dem Zwischenprodukt **GHI** reagiert werden. Es ist jedoch auch möglich, zunächst die Epoxidverbindungen **G** mit den Fettsäuren **H** zu einem Produkt **GH** umzusetzen, und die verbliebene Epoxidgruppen in **GH** dann mit den Aminen **I** zu reagieren. Es ist ebenfalls möglich, die Reaktion zugleich vorzunehmen und so in einem Schritt zu den Zwischenprodukten **GHI** zu gelangen. Die Mengen der Edukte **G, H** und **I** werden so gewählt, daß im wesentlichen alle Epoxidgruppen, d. i. mindestens 90 %, bevorzugt mindestens 95 %, und insbesondere mindestens 98 % der in **G** ursprünglich vorhandenen Epoxidgruppen umgesetzt werden. Ebenso ist die Reaktion vorzugsweise so zu führen, daß das Zwischenprodukt **GHI** keine reaktiven Aminwasserstoffatome mehr aufweist, maximal jedoch darf der Gehalt an Aminwasserstoffatomen 10 mmol/kg betragen.

Zur Herstellung der erfindungsgemäßen Umsetzungsprodukte **G'GHI** werden die Komponenten bevorzugt in den folgenden Stoffmengenanteilen umgesetzt:
auf 1 mol der Epoxidverbindung **G** werden 0,1 bis 1,0 mol, bevorzugt 0,2 bis 0,9 mol und besonders bevorzugt 0,25 bis 0,8 mol der Fettsäuren **H** und 0,5 bis 1,9 mol, bevorzugt 0,6 bis 1,75 mol, und besonders bevorzugt 0,65 bis 1,5 mol der Amine **I** in der ersten Stufe eingesetzt, und darauf in der zweiten Stufe 0,2 bis 1,0 mol, bevorzugt 0,25 bis 0,9, besonders bevorzugt 0,3 bis 0,8 mol der Epoxidverbindung **G'** mit dem Addukt der ersten Stufe reagiert.

Die erfindungsgemäßen fremdemulgierten wäßrigen Epoxidharze sowie die solche enthaltenden Mischungen lassen sich zur Beschichtungsmitteln formulieren, die auf Substraten wie Metallen, Kunststoffen, Holz, Textilien oder Karton rasch trocknende Filme bilden, die durch Bestrahlen mit energiereichem Licht oder anderer aktinischer Strahlung zu zähelastischen Filmen ausgehärtet werden könne, die hervorragende Haftung auf dem Untergrund zeigen, auch bei schlagartiger Beanspruchung nicht einreißen oder abplatzen, und die ausgezeichneten Korrosionsschutz insbesondere gegen sauer und salzhaltige wäßrige Lösungen ermöglichen.

Insbesondere sind die erfindungsgemäßen Beschichtungsmittel zur Beschichtung von Metallen geeignet, wobei die Lackfilme das Substrat wirkungsvoll vor Korrosion schützen und eine Beschichtung mit hervorragender Elastizität ergeben.

Zur Formulierung von Lacken werden bevorzugt Photoinitiatoren zugesetzt, gegebenenfalls weitere übliche Zusätze wie Entschäumer, Verlaufsmittel oder, wenn pigmentierte Lacke hergestellt werden, auch Antiabsetzmittel. Die Lackschicht wird nach dem Auftragen nach einem der üblichen Verfahren wie Walzen, Tauchen, Streichen, Aufrakeln oder Sprühen bei 20 bis 90 °C, bevorzugt bei ca. 60 bis ca. 70 °C abgelüftet und anschließend durch Bestrahlen mit energiereicher Strahlung, insbesondere UV-Licht, durch Vernetzung gehärtet.

Durch die nachfolgenden Beispiele wird die Erfindung näher erläutert. In den Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

### Beispiel 1 Hydrophiles Epoxidharz

1000 g Polyäthylenglykol PEG 4000 (mittlere molare Masse ca. 4000 g/mol) wurden auf 120 °C erhitzt und unter Durchleiten von Stickstoff bei vermindertem Druck vom gelösten Wasser befreit. Dann wurden 110 g Bisphenol A-Diglycidyläther und danach 1,7 g einer 50 %igen wäßrigen Lösung von Tetrafluorborsäure zugefügt. Nach Erreichen eines konstanten spezifischen Epoxidgruppengehalts von ca. 0,1 bis 0,2 mol/kg wurde durch Zugabe von 1100 g Wasser verdünnt bis auf einem Festkörper-Massenanteil von ca. 50 %.

### Beispiel 2 Epoxidharz-Säure-Addukt

534 g Bisphenol A-Diglycidyläther wurden mit 165 g Bisphenol A und 600 g der wäßrigen Lösung aus Beispiel 1 vermischt und auf 125 °C geheizt. Unter vermindertem Druck wurden ca. 300 g Wasser aus der Mischung abdestilliert, der entwässerten Mischung wurden bei der gehaltenen Temperatur 0,2 g Triphenylphosphin zugesetzt. Durch die Wärmetönung heizte sich die Mischung auf ca. 140 °C auf. Es wurde bei dieser Temperatur ca. 4 h gehalten, bis der spezifische Epoxidgruppengehalt auf 1,3 bis 1,4 mol/kg abgesunken war. Anschließend wurden weiter 700 g Bisphenol A-Diglycidyläther zugegeben und die Mischung wurde auf 105 °C abgekühlt. Unter einem Luftschleier wurden 365 g Acrylsäure, stabilisiert mit 4 g Hydrochinon-Monomethyläther, und 2 g Benzyldimethylamin während ca. 2 Stunden zugetropft. Die Reaktionsmischung wurde weitere 8 Stunden gerührt, bis die Säurezahl auf weniger als 10 mg/g gesunken war.

### Beispiel 3 Urethanacrylat

1334 g eines Addukts von gleichen Stoffmengen von Acrylsäure und dem Glycidylester der ®Versatic-10-Säure (einer Mischung von in α-Stellung verzweigten gesättigten aliphatischen Monocarbonsäuren mit 10 Kohlenstoffatomen, wobei mindestens einer der Alkylreste in α-Stellung ein Methylrest ist), 180 g 1-4-Butandiol, 3 g Hydrochinonmonomethyläther und 0,6 g Dibutylzinndilaurat wurden gemischt und auf 70 bis 80 °C aufgeheizt. Unter einem Luftschleier wurden 696 g einer technischen Mischung von 2,4- und 2,6-Toluylendiisocyanat so zugegeben, daß die Temperatur gehalten werden konnte. Nach ca. 2 Stunden war der Massenanteil an nicht umgesetzten Isocyanatgruppen auf unter 0,1 % gefallen.

### Beispiel 4 Mischung von Urethanacrylat und Epoxidharz-Säure-Addukt

1845 g des Epoxidharz-Säure-Addukts aus Beispiel 2 wurden mit 1760 g des Urethanacrylats aus Beispiel 3 unter gutem Rühren gemischt. In drei Portionen wurden jeweils 609 g voll entsalztes (VE-) Wasser zugesetzt und mit einem schnellaufenden Rührer intensiv vermischt. Durch Zugabe von weiteren 502 g VE-Wasser wurde auf einen Festkörper-Massenanteil von ca. 60 % eingestellt.

### Beispiel 5 Prüfung des Bindemittels aus Beispiel 4

Zu 100 g der wäßrigen Dispersion aus Beispiel 4 wurde eine Lösung von 3 g eines Photoinitiators (®Irgacure 184) in 3 g Butylglykol gegeben. Die Viskosität des so hergestellten Klarlacks betrug 1014 mPa·s bei 23 °C und einem Schergefälle von 25 s⁻¹.

Mit diesem Klarlack wurden ein Rostschutz-Bonderblech (Stahlblech aus ST 1405, unbehandelt, einseitig geschliffen, Beispiel 5.1) und ein Stahlblech 26S/60/OC (aus ST 1405, spritzphosphatiert, Beispiel 5.2) beschichtet und bei 60 °C während 10 min getrocknet. Die Trockenfilmstärke war jeweils 50 µm. Die Pendelhärte des Films (gemessen auf einer Glasplatte bei 50 µm Schichtdicke des Trockenfilms) betrug 24 h nach der Trocknung 174 s.

Als Vergleich (Beispiel 5V.1 und 5V.2) wurden Bleche aus demselben Material mit einem kommerziellen Urethanacrylat-Lack, gelöst in Reaktivverdünner (Trimethylolpropan-formal-monoacrylat) mit derselben Trockenfilmstärke geprüft. Die Vergleichsbeispiele V3 und V4 wurden mit einem wäßrigen Klarlack durchgeführt, der in der EP-B 0 694 531, Beispiel 6 mit Urethanharz aus Beispiel 4, beschrieben ist

Dabei wurde der wäßrige Klarlack mit einer Rakel aufgetragen, bei Raumtemperatur ca. 10 bis 15 min abgelüftet, und anschließend durch Bestrahlen mit einer UV-Lampe (80 W) in einer Entfernung von 10 cm mit einem Vorschub von 5 bis 10 m/min gehärtet.

Neben der mechanischen Prüfung wurden die beschichteten Bleche bezüglich der Wasser- und Lösungsmittelfestigkeit der Beschichtung, und bezüglich der Korrosionsfestigkeit im Salzsprühtest (mit und ohne Ritzen in der Lackschicht) geprüft. Bei der Lösungsmittel- (Aceton-) und der Wasserbeständigkeit wurde die Zeit angegeben, bis zu der keine oberflächlichen Veränderungen der Lackschicht zu erkennen waren. Im letzteren Fall wurde angegeben, welcher Anteil der beschichteten Fläche mit Rost befallen ist.

Die Ergebnisse sind in den Tabellen 1 und 2 zusammengefaßt.

### Beispiel 6 Mischung des Bindemittels aus Beispiel 4 mit einem Epoxid-Amin-Fettsäure-Addukt

Gemäß der EP-A 1 233 034 wurde ein Addukt hergestellt:

1900 g eines Epoxidharzes auf Basis von Bisphenol A mit einem spezifischen Epoxidgruppengehalt von 2,1 mol/kg ("Epoxidäquivalentgewicht" EEW = 475 g/mol) wurden in Methoxypropanol als Lösungsmittel mit 420 g Tallölfettsäure (1,5 mol), 102 g Dimethylaminopropylamin (1 mol) und 53 g (0,5 mol) Diäthanolamin zu einer 70 %igen Lösung (70 g Feststoff in 100 g der Lösung) gelöst und bei 110 °C bis zum vollständigen Verbrauch der Epoxidgruppen reagiert.

Anschließend wurden 60 mmol Essigsäure auf 100 g des Festharzes zugegeben, und dann wurde mit voll entsalztem Wasser verdünnt auf einen Festkörper-Massenanteil (Massenanteil an nichtflüchtigen Stoffen) von 40 %.

Zu dieser wäßrigen Lösung wurde bei 90 °C innerhalb von einer Stunde 250 g Bisphenol A-Diglycidyläther zugegeben, und die Mischung wurde unter Rühren bei dieser Temperatur gehalten, bis keine Epoxidgruppen mehr nachweisbar waren. Durch weiteren Zusatz von Wasser wurde auf einen Festkörper-Massenanteil von 38 % verdünnt.

60 g dieses wäßrigen Bindemittels wurden mit 60 g des Bindemittels aus Beispiel 4 vermischt, es wurden weiter 30 g Wasser sowie eine Lösung von 3 g ®Irgacure 184 in 3 g Butylglykol zugesetzt. Die Viskosität des so hergestellten Klarlacks betrug 122 mPa·s. Die Pendelhärte eines Films (gemessen auf einer Glasplatte bei 50 µm Schichtdicke des Trockenfilms) betrug 24 h nach der Trocknung 111 s.

### Beispiel 7 Prüfung der Harze aus Beispiel 6

Bleche aus demselben Material wie in Beispiel 5 wurden mit dem Klarlack aus Beispiel 7 beschichtet (Beispiele 7.1 und 7.2), ebenfalls zu einer Trockenfilmstärke von 50 µm. Die Applikation und Vernetzung des Lacks durch Bestrahlen erfolgte wie im Beispiel 5. Die Ergebnisse der mechanischen Tests, der Beständigkeitsprüfung und der Korrosionsprüfung in den Tabellen 1 und 2 zusammengefaßt.

**Tabelle 1 Ergebnisse der mechanischen Prüfung**

| Klarlack aus Beispiel | | 5 | | Vergleich | | | | 6 | |
|---|---|---|---|---|---|---|---|---|---|
| Blech | | 5.1 Rostschut z-bonder | 5.2 phosphatiert | V.1 Rostschut z-bonder | V.2 phosphatiert | V.3 Rostschut z-bonder | V.4 phosphatiert | 6.1 Rostschutzbonder | 6.2 phosphatiert |
| Erichsen-Tiefung | | 8,5 | 6,5 | 9 | 9 | 8 | 7 | 9 | 9 |
| | in mm | | | | | | | | |
| Kugelschlag-Test | | 7,9/3,4 | 3,4/1,1 | 9,0/9,0 | 9,0/9,0 | 9,0/7,9 | 7,9/5,7 | 7,9/5,7 | 5,7/4,5 |
| | in j (in lb) | (70/30) | (30/10) | (80/80) | (80/80) | (80/70) | (70/50) | (70/50) | (50/40) |
| Gitterschnitt | | 3/4 | 0/0 | 0/0 | 0/0 | 3/4 | 1/2 | 0/0 | 0/0 |

Die Erichsen-Tiefung wurde gemäß der Norm DIN EN ISO 1520, der Gitterschnitt gemäß der Norm DIN EN ISO 2409 gemessen und ausgewertet. Der Schlagtest wird gemäß der ASTM-Norm D 2794 durchgeführt.

Es ergibt sich, daß die wäßrigen Klarlacke gemäß den Beispielen 5 und 6 zu Filmen führen, deren mechanische Werte denen der bekannten in Reaktiwerdünnern gelösten Systeme ebenbürtig sind.

**Tabelle 2 Beständigkeit und Korrosionsfestigkeit**

| Klarlack aus Beispiel | | 5 | | Vergleich | | | | 6 | |
|---|---|---|---|---|---|---|---|---|---|
| Blech | | 5.1 Rostschut z-bonder | 5.2 phosphatiert | V.1 Rostschut z-bonder | V.2 phosphatier t | V.3 Rostschutzbonder | V.4 phosphatiert | 6.1 Rostschutzbonder | 6.2 phosphatiert |
| Wasserbeständigkeit in h | | > 24 | > 24 | > 24 | > 24 | > 24 | > 24 | > 24 | > 24 |
| Acetonbeständigkeit in h | | >24 | > 24 | > 4 | > 4 | 16 | 16 | 1 | 1 |
| Salzsprühtest nach 24 h mit | | 10 mm | i. O. | 20 mm | i. O. | 20 mm | 10 mm | i. O. | i. O. |
| | ohne Ritz | 30 % B | i. O. | 80 % R | i. O. | 40 % B | 20 % B | i. O. | i. O. |
| Salzsprühtest nach 72 h mit | | 20 mm | i. O. | | i. O. | 100 % B | 90 % B | 2mm | i. O. |
| | ohne Ritz | 80 % B | i. O. | | 5%R | 100 % B | 90 % B | i. O. | i. O. |
| Salzsprühtest nach 96 h mit | | | i. O. | | i. O. | | | 2 mm | i. O. |
| | ohne Ritz | | i. O. | | 10 % R | | | i. O. | i. O. |
| Salzsprühtest nach 360 h mit | | | 7 mm | | 5 mm | | | 20 mm | 2 mm |
| | | | | | 10 % R | | | 10 % R | |
| | ohne Ritz | | 2 % R | | 30 % R | | | 40 % R, w | w |

Dabei werden als "Beständigkeit" die Zeiten angegeben, innerhalb derer der Film bei Kontakt mit dem betreffenden Agens (Wasser bzw. Aceton) kein sichtbare Veränderung zeigt. Im Salzsprühtest bedeuten die Längenangaben in mm den Weg der Unterwanderung durch Rost vom Ritz weg, die Bezeichnungen: "R" den Flächenanteil in %, der von Rost befallen ist, ein kleines "w" bedeutet "Weißrost".

Bei dem Test werden die Kanten der Bleche mit Klebeband umklebt bis ca. 1 cm Abstand von der Kante, dies verhindert das Abheben des Lackfilms von der Kante.

Es ist deutlich, daß die erfindungsgemäßen wäßrigen Klarlacke einen erheblich besseren Korrosionsschutz verleihen als die bekannten Systeme auf Basis von Reaktivverdünnern (V1 und V2) sowie die bekannten wäßrigen Systeme auf Basis von anionisch stabilisierten Urethanacrylaten (V3 und V4 gemäß der EP-B 0 694 531).

## Patentansprüche

1. Wäßrige strahlenhärtbare Bindemittel enthaltend nichtionisch stabilisierte Epoxidharze ABC mit olefinisch ungesättigten, radikalisch polymerisierbaren Gruppen; **dadurch gekennzeichnet, daß** sie Bausteine enthalten von mit Polyäthylenglykol modifizierten Epoxidharzen A, von Epoxidharzen B, die frei von Polyäthylenglykol sind, und von olefinisch ungesättigten Säuren C mit einer Carboxylgruppe, und daß mindestens 50 % aller von den Epoxidharzen A und B abgeleiteten Reaktionsprodukte mindestens eine Estergruppe enthalten, die durch Reaktion einer endständigen Epoxidgruppe mit einer olefinisch ungesättigten Säure C mit einer Carboxylgruppe gebildet ist.

2. Wäßrige strahlenhärtbare Bindemittel nach Anspruch 1, **dadurch gekennzeichnet, daß** sie Mischungen der nichtionisch stabilisierten Epoxidharze **ABC** mit olefinisch ungesättigten, radikalisch polymerisierbaren Gruppen mit ungesättigten Urethanen **DEF** enthalten, wobei diese Urethane **DEF** abgeleitet sind von mehrfunktionellen Isocyanaten **D,** von mehrfunktionellen aliphatischen Alkoholen E und von Hydroxylgruppen-haltigen olefinisch ungesättigten Verbindungen **F**.

3. Wäßrige strahlenhärtbare Bindemittel nach Anspruch 2, **dadurch gekennzeichnet, daß** das Verhältnis der Masse der Epoxidharze **ABC** zu Masse der Urethane **DEF** 90 bis 30 zu 10 bis 70 beträgt.

4. Wäßrige strahlenhärtbare Bindemittel nach Anspruch 1, **dadurch gekennzeichnet, daß** sie zusätzlich Umsetzungsprodukte **G'GHI** enthalten aus Epoxidharzen **G'** mit mindestens zwei Epoxidgruppen pro Molekül und Reaktionsprodukten **GHI** von Epoxidharzen **G,** Fettsäuren **H** und Aminen **I**.

5. Wäßrige strahlenhärtbare Bindemittel nach Anspruch 4, **dadurch gekennzeichnet, daß** das Verhältnis der Masse von Epoxidharzen **ABC** zur Masse der Umsetzungsprodukte **G'GHI** 90 bis 30 zu 10 bis 70 beträgt.

6. Wäßrige strahlenhärtbare Bindemittel nach Anspruch 2, **dadurch gekennzeichnet, daß** sie zusätzlich Umsetzungsprodukte **G'GHI** enthalten aus Epoxidharzen **G'** mit mindestens zwei Epoxidgruppen pro Molekül und Reaktionsprodukten **GHI** von Epoxidharzen **G,** Fettsäuren **H** und Aminen **I**.

7. Wäßrige strahlenhärtbare Bindemittel nach Anspruch 6, **dadurch gekennzeichnet, daß** das Verhältnis der Summe der Massen von Epoxidharzen **ABC** und Urethanen **DEF** zur Masse der Umsetzungsprödukte **G'GHI** 90 bis 30 zu 10 bis 70 beträgt.

8. Verfahren zur Herstellung von wäßrigen strahlenhärtbaren Bindemitteln nach Anspruch 1, **dadurch gekennzeichnet, daß** zunächst ein mit Polyäthylenglykol modifiziertes Epoxidharz **A** durch Umsetzung der dem Epoxidharz zugrundeliegenden Hydroxyverbindung und dem dem Epoxidharz zugrundeliegenden Diepoxid im Sinne einer Advancement-Reaktion hergestellt wird, dies mit einem nicht mit Polyoxyäthylengruppen modifizierten Epoxidharz **B** vermischt und im zweiten Schritt diese Mischung mit einer olefinisch ungesättigten Säure **C** umgesetzt wird, wobei sich unter Ringöffnung der Epoxidringe eine Adduktmischung **ABC** bildet, wobei die Reaktionsprodukte eine Halbester- und eine Hydroxylgruppe aufweisen.

9. Verfahren zur Herstellung von wäßrigen strahlenhärtbaren Bindemitteln nach Anspruch 2, **dadurch gekennzeichnet, daß** aus einem mehrfunktionellen Isocyanat D, gegebenenfalls einer gesättigten mehrfunktionellen aliphatischen Hydroxyverbindung **E** und einer olefinisch ungesättigten aliphatischen Verbindung **F** mit einer Hydroxylgruppe und mindestens einer olefinischen Doppelbindung ein Urethanacrylat DEF hergestellt wird und dies mit dem gemäß Anspruch 8 hergestellten Addukt **ABC** vermischt wird.

10. Verfahren zur Herstellung von wäßrigen strahlenhärtbaren Bindemitteln nach Anspruch 4, **dadurch gekennzeichnet, daß** durch Umsetzung von Epoxidverbindungen **G** mit Aminen I und Fettsäuren **H** eine Zwischenprodukt hergestellt wird, das durch anschließende Reaktion mit einem Epoxidharz **G'** mit mindestens 2 Epoxidgruppen pro Molekül zu dem Addukt **G'GHI** umgesetzt wird; das mit dem gemäß Anspruch 8 hergestellten Addukt **ABC** vermischt wird.

11. Verfahren zur Herstellung von wäßrigen strahlenhärtbaren Bindemitteln nach Anspruch 6, **dadurch gekennzeichnet, daß** durch Umsetzung von Epoxidverbindungen **G** mit Aminen **I** und Fettsäuren **H** eine Zwischenprodukt hergestellt wird, das durch anschließende Reaktion mit einem Epoxidharz **G'** mit mindestens 2 Epoxidgruppen pro Molekül zu dem Addukt G'GHI umgesetzt wird, das mit der gemäß Anspruch 9 hergestellten Mischung vermischt wird.

12. Verwendung von wäßrigen strahlenhärtbaren Bindemitteln nach einem der Ansprüche 1, 2, 4 oder 6 zur Herstellung von Korrosionsschutzbeschichtungen auf Substraten, umfassend die Schritte Mischen der Bindemittel mit einem Photoinitiator und gegebenenfalls weiteren Zusätzen, Aufziehen des wäßrigen Lacks nach einem der Verfahren Walzen, Tauchen, Sprühen, Aufrakeln oder Streichen auf ein Substrat, Ablüften der Beschichtung bei einer Temperatur von 20 bis 90 °C und Vernetzung durch Bestrahlung mit energiereicher Strahlung.

13. Verwendung gemäß Anspruch 12 zur Herstellung von Korrosionsschutzbeschichtungen auf Metallen.

## Claims

1. Aqueous, radiation-curable binders comprising non-ionically stabilised epoxy resins **ABC** with olefinically unsaturated, free radically polymerisable groups, **characterised in that** they comprise building blocks of epoxy resins **A** modified with polyethylene glycol, of epoxy resins **B** that are free from polyethylene glycol and of olefinically unsaturated acids **C** with a carboxyl group, and that at least 50% of all reaction products derived from the epoxy resins **A** and **B** comprise at least one ester group formed by reaction of a terminal epoxy group with an olefinically unsaturated acid **C** with a carboxyl group.

2. The aqueous, radiation-curable binders according to claim 1, **characterised in that** they comprise mixtures of the non-ionically stabilised epoxy resins **ABC** with olefinically unsaturated, free radically polymerisable groups with unsaturated urethanes **DEF,** these urethanes **DEF** being derived from polyfunctional isocyanates **D,** from polyfunctional aliphatic alcohols **E** and from hydroxyl group-containing, olefinically unsaturated compounds **F.**

3. The aqueous, radiation-curable binders according to claim 2, **characterised in that** the ratio of the mass of the epoxy resins **ABC** to the mass of the urethanes **DEF** is 90 to 30:10 to 70.

4. The aqueous, radiation-curable binders according to claim 1, **characterised in that** they additionally comprise conversion products **G'GHI** of epoxy resins **G'** with at least two epoxy groups per molecule and reaction products **GHI** of epoxy resins **G,** fatty acids **H** and amines **I.**

5. The aqueous, radiation-curable binders according to claim 4, **characterised in that** the ratio of the mass of epoxy resins **ABC** to the mass of the conversion products **G'GHI** is 90 to 30:10 to 70.

6. The aqueous, radiation-curable binders according to claim 2, **characterised in that** they additionally comprise conversion products **G'GHI** of epoxy resins **G'** with at least two epoxy groups per molecule and reaction products **GHI** of epoxy resins **G,** fatty acids **H** and amines **I**.

7. The aqueous, radiation-curable binders according to claim 6, **characterised in that** the ratio of the sum of the masses of epoxy resins **ABC** and urethanes **DEF** to the mass of the conversion products **G'GHI** is 90 to 30:10 to 70.

8. A process for the preparation of aqueous, radiation-curable binders according to claim 1, **characterised in that** an epoxy resin **A** modified with polyethylene glycol is firstly prepared by reaction of the hydroxyl compound on which the epoxy resin is based and the diepoxide on which the epoxy resin is based in the way of an advancement reaction, this is mixed with an epoxy resin **B** which is not modified with polyoxyethylene groups and in the second step this mixture is reacted with an olefinically unsaturated acid **C,** wherein a mixture of adducts **ABC** is formed by ring opening of the epoxide rings, the reaction products having a semiester group and a hydroxyl group.

9. A process for the preparation of aqueous, radiation-curable binders according to claim 2, **characterised in that** a urethane acrylate **DEF** is prepared from a polyfunctional isocyanate **D,** optionally a saturated polyfunctional aliphatic hydroxyl compound **E** and an olefinically unsaturated aliphatic compound **F** with a hydroxyl group and at least one olefinic double bond, and this is mixed with the adduct **ABC** prepared according to claim 8.

10. A process for the preparation of aqueous, radiation-curable binders according to claim 4, **characterised in that**, by reaction of epoxide compounds **G** with amines **I** and fatty acids **H,** an intermediate product is prepared which, by subsequent reaction with an epoxy resin **G'** with at least two epoxy groups per molecule, is converted to the adduct **G'GHI,** which is mixed with the adduct **ABC** prepared according to claim 8.

11. A process for the preparation of aqueous, radiation-curable binders according to claim 6, **characterised in that**, by reaction of epoxide compounds **G** with amines **I** and fatty acids **H,** an intermediate product is prepared which, by subsequent reaction with an epoxy resin **G'** with at least two epoxy groups per molecule, is converted to the adduct **G'GHI,** which is mixed with the mixture prepared according to claim 9.

12. Use of aqueous, radiation-curable binders according to one of claims 1, 2, 4 or 6 for the production of anti-corrosive coatings on substrates, comprising the steps of mixing the binders with a photoinitiator and optionally further additives, applying the aqueous coating on to a substrate by one of the methods of rolling, dipping, spraying, application with a doctor blade or brushing, drying the coating at a temperature of 20 to 90°C and curing by irradiation with high energy radiation.

13. The use according to claim 12 for the production of anti-corrosive coatings on metals.

## Revendications

1. Liants aqueux durcissables par rayonnement, contenant des résines époxy ABC stabilisées de façon non ionique avec des groupes oléfiniquement insaturés, pouvant être polymérisés de façon radicalaire, **caractérisés en ce qu'**ils contiennent des éléments constitutifs des résines époxy A modifiées par le polyéthylène glycol, des résines époxy B qui sont dépourvues de polyéthylène glycol et d'acides oléfiniquement insaturés C comportant un groupe carboxyle, et **en ce qu'**au moins 50 % de tous les produits réactionnels dérivés des résines époxy A et B contiennent au moins un groupe ester qui est formé par la réaction d'un groupe époxy terminal avec un acide oléfiniquement insaturé C comportant un groupe carboxyle.

2. Liants aqueux durcissables par rayonnement selon la revendication 1, **caractérisés en ce qu'**ils contiennent des mélanges de résines époxy ABC stabilisées de façon non ionique, avec des groupes oléfiniquement insaturés, pouvant être polymérisés de façon radicalaire, avec des uréthanes DEF insaturés, ces uréthanes DEF découlant d'isocyanates D multifonctionnels, d'alcools aliphatiques E multifonctionnels et de composés F oléfiniquement insaturés, contenant des groupes hydroxyle.

3. Liants aqueux durcissables par rayonnement selon la revendication 2, **caractérisés en ce que** le rapport de la masse des résines époxy ABC à la masse des uréthanes DEF est de 90 à 30 pour 10 à 70.

4. Liants aqueux durcissables par rayonnement selon la revendication 1, **caractérisés en ce qu'**ils contiennent en outre des produits de conversion G'GHI de résines époxy G' comportant au moins deux groupes époxy par molécule et des produits réactionnels GHI de résines époxy G, d'acides gras H et d'amines I.

5. Liants aqueux durcissables par rayonnement selon la revendication 4, **caractérisés en ce que** le rapport de la masse des résines époxy ABC à la masse des produits de conversion G'GHI est de 90 à 30 pour 10 à 70.

6. Liants aqueux durcissables par rayonnement selon la revendication 2, **caractérisés en ce qu'**ils contiennent en outre des produits de conversion G'GHI de résines époxy G' comportant au moins deux groupes époxy par molécule et des produits réactionnels GHI de résines époxy G, d'acides gras H et d'amines I.

7. Liants aqueux durcissables par rayonnement selon la revendication 6, **caractérisés en ce que** le rapport du total des masses des résines époxy ABC et des uréthanes DEF à la masse des produits de conversion G'GHI est de 90 à 30 pour 10 à 70.

8. Procédé de production de liants aqueux durcissables par rayonnement selon la revendication 1, **caractérisé en ce que** l'on produit tout d'abord une résine époxy A modifiée par un polyéthylène glycol par réaction du composé hydroxy à la base de la résine époxy, et du diépoxyde à la base de la résine époxy dans le sens d'une réaction d'avancement, ceci est mélangé avec une résine époxy B non modifiée par des groupes polyoxyéthylène et dans la deuxième étape, on fait réagir ce mélange avec un acide C oléfiniquement insaturé, un mélange de réactifs ABC se formant avec l'ouverture de cycle des cycles époxy, les produits réactionnels présentant un groupe semi-ester et un groupe hydroxyle.

9. Procédé pour la production de liants aqueux durcissables par rayonnement selon la revendication 2, **caractérisé en ce que**, à partir d'un isocyanate multifonctionnel D, éventuellement, d'un composé hydroxy aliphatique multifonctionnel saturé E et d'un composé aliphatique oléfiniquement insaturé F comportant des groupes hydroxyle et au moins une double liaison oléfinique, un acrylate d'uréthane DEF est produit et celui-ci est mélangé avec le réactif ABC produit selon la revendication 8.

10. Procédé de production de liants aqueux durcissables par rayonnement selon la revendication 4, **caractérisé en ce que**, par réaction de composés époxy G avec des amines I et des acides gras H, on produit un produit intermédiaire qui est converti par une réaction consécutive, avec une résine époxy G' comportant au moins 2 groupes époxy par molécule, en réactif G'GHI qui est mélangé avec le réactif ABC produit selon la revendication 8.

11. Procédé de production de liants aqueux durcissables par rayonnement selon la revendication 6, **caractérisé en ce que**, par réaction de composés époxy G avec des amines I et des acides gras H, on produit un produit intermédiaire qui est converti par une réaction consécutive, avec une résine époxy G' comportant au moins 2 groupes époxy par molécule, en réactif G'GHI qui est mélangé avec le mélange produit selon la revendication 9.

12. Utilisation de liants aqueux durcissables par rayonnement selon l'une des revendications 1, 2, 4 ou 6, pour la production de revêtements anticorrosion sur des substrats, comprenant les étapes de mélange des liants avec un photo-initiateur et éventuellement, d'autres additifs, d'application de la laque aqueuse selon l'un des procédés d'application au rouleau, d'immersion, de pulvérisation, d'application à la lame ou au pinceau sur un substrat, d'aération du revêtement à une température de 20 à 90° C et de réticulation par rayonnement avec un rayonnement riche en énergie.

13. Utilisation selon la revendication 12, pour la production de revêtements anticorrosion sur des métaux.
